# DEMANDE DE BREVET EUROPEEN

(11) **EP 0 892 121 A1**
(43) Date de publication de la demande: **20.01.1999**
(21) Numéro de dépôt: 97401701.4
(22) Date de dépôt: 15.07.1997
(51) Int. Cl.: E04C 2/22, B65D 6/34

(54) **Procédé de réalisation de structure rigide en polycarbonate ou PVC alvéolaire et utilisation du procédé dans la fabrication d'abris ou emballages**

(71) Demandeur: Tisserand, Jean Paul, 36270 Sainte-Lizaigne (FR)
(72) Inventeur: Tisserand, Jean Paul, 36270 Sainte-Lizaigne (FR)
(74) Mandataire: Debay, Yves

(57) **Abrégé**

La présente invention concerne un procédé de réalisation de structure rigide en polycarbonate ou PVC alvéolaire et son utilisation pour la réalisation d'abri ou emballages.

Le procédé de réalisation de structure rigide est caractérisé en ce qu'il consiste :
à insérer à des intervalles donnés dans les tunnels (13) traversant la plaque (1) de polycarbonate des tiges (21, 22) de matériau rigide ayant une rigidité supérieure à celle du polycarbonate ou du PVC alvéolaire suffisante pour les besoins de la structure à réaliser;
à plier au niveau des tiges (21, 22) la feuille (1) de polycarbonate ou PVC alvéolaire ainsi obtenue selon des directions transversales aux directions d'insertion des tiges de façon à constituer la forme souhaitée pour la structure;
à découper la plaque (1) aux dimensions nécessaires pour la constitution de la structure.

## Description

La présente invention concerne un procédé de réalisation de structure rigide en polycarbonate ou PVC alvéolaire ou tout autre produit alvéolaire souple et son utilisation pour la réalisation, par exemple, d'abris, d'emballages ou boîtiers.

Il est connu de réaliser des structures en polycarbonate ou PVC alvéolaire pour exploiter les qualités de transparence ou translucidité du polycarbonate ou du PVC alvéolaire. Toutefois l'utilisation du polycarbonate dans les applications d'abris a été freinée malgré l'avantage de transmission de la lumière à cause notamment de son manque de rigidité. Ainsi lorsque l'on veut réaliser, par exemple, une serre ou un abri ou un auvent en polycarbonate ou PVC alvéolaire il est nécessaire de construire au préalable une structure rigide dans laquelle les plaques de polycarbonate sont insérées ou montées. Ceci a pour inconvénient majeur de rendre cette utilisation du polycarbonate ou du PVC alvéolaire non compétitive car le coût du produit est lourdement grevé par les coûts de réalisation de la structure rigide. De plus le produit final est alourdi par la structure rigide.

La présente invention propose donc un procédé de réalisation de structure rigide permettant de pallier les inconvénients de l'art antérieur tout en bénéficiant des avantages du polycarbonate ou du PVC alvéolaire.

Ce but est atteint par le fait que le procédé de réalisation de structure rigide consiste :
à insérer à des intervalles donnés dans les tunnels ou alvéoles traversant la plaque de polycarbonate des tiges de matériau rigide ayant une rigidité supérieure à celle du polycarbonate ou du PVC alvéolaire suffisante pour les besoins de la structure à réaliser;
à plier au niveau des tiges la feuille de polycarbonate ou PVC alvéolaire ainsi obtenue selon des directions transversales aux directions d'insertion des tiges de façon à constituer la forme souhaitée pour la structure;
à découper la plaque aux dimensions nécessaires pour la constitution de la structure.

Selon une autre particularité la dimension des tiges est adaptée à la dimension des tunnels traversant la plaque de polycarbonate ou PVC alvéolaire de façon à être retenue par friction pendant la phase de transport jusqu'au poste de pliage.

Selon une autre particularité les tiges sont découpées aux Dimensions de la plaque de polycarbonate ou PVC alvéolaire.

Selon une autre particularité les tiges sont découpées plus courtes que les dimensions de la plaque de polycarbonate ou PVC alvéolaire.

Selon une autre particularité une bordure en U est solidarisée aux extrémités ouvertes de la plaque de polycarbonate ou PVC alvéolaire.

Selon une autre particularité chaque bordure en U est solidarisée à la plaque de polycarbonate par collage.

Un autre but de l'invention est de proposer un produit résultant du procédé de l'invention.

Ce but est atteint par le fait que le procédé de réalisation de structure rigide est utilisé pour la fabrication d'un abri constitué d'une plaque de polycarbonate ou PVC alvéolaire, la plaque comportant à intervalle régulier, insérées dans ses alvéoles des tiges métalliques de rigidification, ces tiges et la plaque étant pliées selon au moins une ligne formant un angle avec la direction des alvéoles.

Selon une autre particularité la plaque de polycarbonate ou PVC alvéolaire comporte au moins deux plages de façon à constituer une fois mise sur le sol un tunnel.

Selon une autre particularité les extrémités de la plaque débouchant sur les alvéoles sont rendues solidaires d'une bordure en U.

Selon une autre particularité le procédé de réalisation de structure rigide est utilisé pour la fabrication d'un boîtier ou emballage constitué d'une plaque de polycarbonate ou PVC alvéolaire comportant au moins deux plages de façon à constituer un corps sensiblement tubulaire dont les faces forment les parois longitudinales d'un emballage ou boîte, deux plaquettes de polycarbonate ou PVC alvéolaire rigide étant rendue solidaires respectivement des deux extrémités du corps tubulaire de façon à constituer les deux parois latérales de la boîte

Selon une autre particularité la ou les portions de la plaque située entre une ligne de pliage et le bord libre d'une première extrémité de la plaque constitue le couvercle de fermeture de la boîte, le couvercle pouvant être rendu solidaire, par des moyens de fixation amovible, d'une seconde extrémité de la plaque, situé à l'opposé de la première extrémité, pour assurer le verrouillage amovible du couvercle de la boîte

Selon une autre particularité les plaquettes de polycarbonate ou PVC alvéolaire constituant les parois latérales de la boîte sont fixées respectivement au niveau des bords des extrémités du corps tubulaire formant les parois longitudinales de la boîte par collage, rivetage ou tout autre moyen équivalent.

D'autres particularités et avantages de la présente invention apparaîtront plus clairement à la lecture de la description ci-après faite en référence aux dessins annexés dans lesquels :
la figure 1 représente une vue en perspective d'un premier exemple utilisation du procédé selon l'invention,
la figure 2 représente une vue en coupe du produit obtenu lors d'une phase de mise en oeuvre du procédé de l'invention,
la figure 3 représente une vue en perspective d'un second exemple utilisation du procédé selon l'invention.

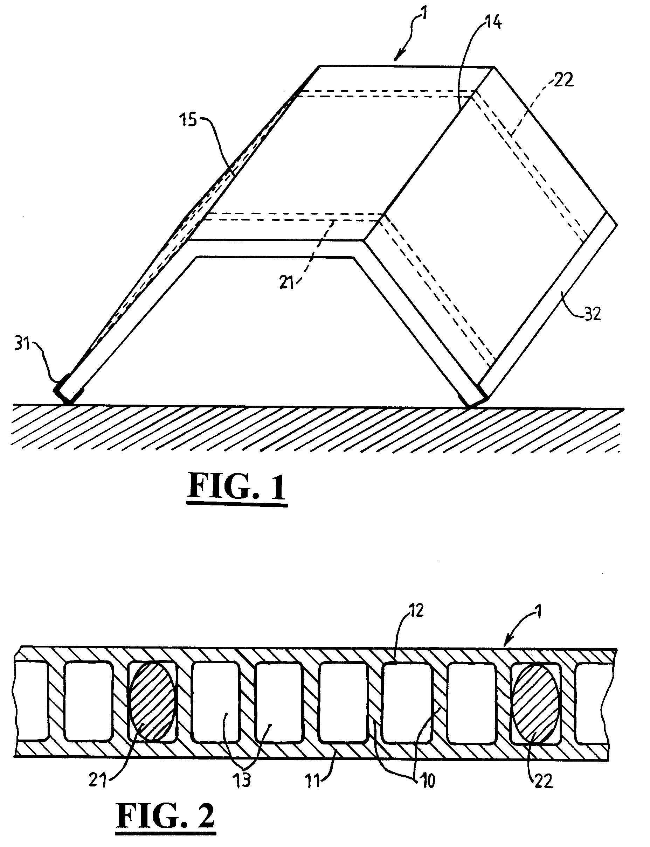

Le procédé d'invention va maintenant être décrit en liaison avec la figure 2 sur laquelle on peut voir une vue en coupe d'une plaque de polycarbonate (1) constituée de façon connue de deux surfaces opposées (12, 11) reliées entre elles par des entretoises rectilignes (10) qui constituent entre elles des tunnels ou alvéoles (13) débouchant à deux extrémités opposées de la plaque. Le procédé de fabrication consiste à introduire à intervalle régulier dans au moins deux tunnels de la plaque de polycarbonate ou PVC alvéolaire des tiges (21, 22) de matériau ayant une rigidité suffisante pour la structure souhaitée. Dans certaine application on peut utiliser de l'acier ou de l'aluminium. On peut envisager également l'utilisation de tout autre matériau qui assure à la structure une rigidité suffisante et qui soit malgré tout pliable. Les tiges introduites dans les alvéoles sont ensuite coupées aux dimensions de la plaque de façon à ce qu'elles ne dépassent pas de celle-ci, puis la plaque est dimensionnée selon le produit à obtenir. Il suffit ensuite de plier la plaque (1) renforcée par les tiges (21, 22) selon des directions substantiellement transversales aux tiges (21, 22) pour constituer la forme de la structure souhaitée. Ainsi comme représenté à la figure 1, si l'on plie une plaque (1) selon deux lignes (14, 15) parallèles entre elles et perpendiculaires aux directions des tiges de renfort (21, 22) on obtient un chapeau qui une fois posé sur le sol constitue un tunnel pouvant être utilisé comme serre. Pour ce genre d'application, il est préférable de pourvoir chacune des extrémités ouvertes débouchant sur les alvéoles (13) d'un profilé en U (31, respectivement 32) solidarisé des extrémités de la plaque comme représenté à la figure 1 de façon à obturer les alvéoles. Ces profilés permettent d'éviter que les insectes s'introduisent dans les rainures pour y constituer leur nid, ce qui risque à la longue dépacifier la plaque de polycarbonate ou tout au moins de réduire ses qualités de translucidité et de transmission de la lumière. On pourra également envisager de réaliser, grâce au procédé de l'invention, des auvents, des abris voire des vérandas qui sont à la fois peu onéreux et suffisamment rigide.

Il est bien évident que l'exemple d'utilisation du procédé représenté à la figure 1 n'est nullement limitatif et que le procédé peut également être utilisé dans la constitution de tout autre produit dans lequel le polycarbonate présente un intérêt pour ses qualités physiques ou esthétiques et où jusqu'à présent son application ne pouvait pas être envisagée par manque de rigidité des plaques et de la pure. Ainsi, par exemple, le procédé de réalisation de structure rigide peut être utilisé pour la fabrication d'emballages ou boîtiers.

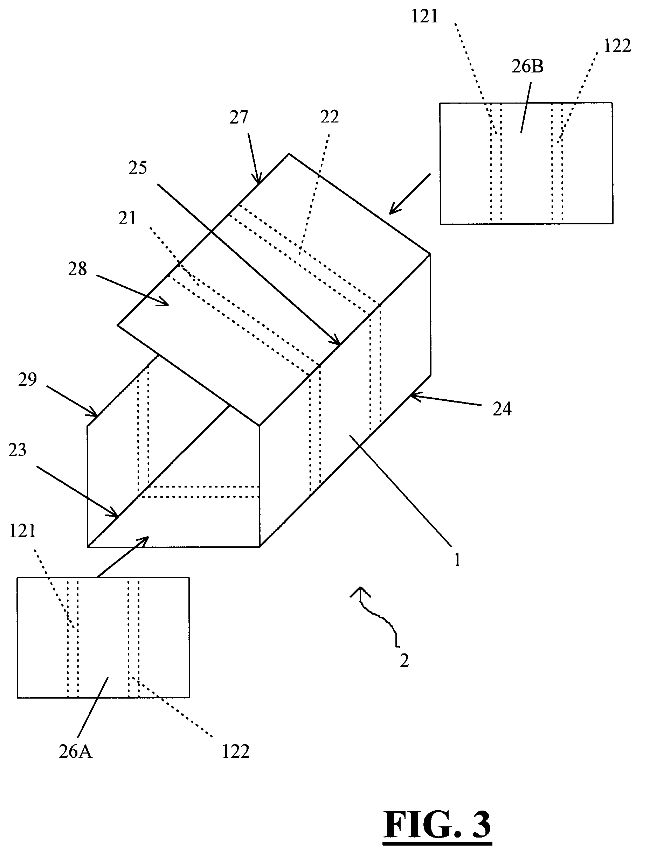

La figure 3 illustre un exemple d'utilisation du procédé de réalisation de structure rigide selon l'invention pour la fabrication d'emballages ou boîtes. Pour fabriquer une boîte (2), une plaque (1) de polycarbonate ou PVC alvéolaire renforcée peut être pliée selon au moins deux lignes substantiellement perpendiculaires aux directions des tiges (21, 22) de renfort. La plaque (1) renforcée est pliée de façon à former un corps sensiblement tubulaire dont les faces constituent, par exemple, les parois longitudinales de la boîte (2). Deux plaquettes (26A, 26B) de polycarbonate ou PVC alvéolaire rigide peuvent être rendues solidaires respectivement des deux extrémités du corps tubulaire de façon à constituer les deux parois latérales de la boîte (2). Dans l'exemple nullement limitatif de la figure 3, la plaque (1) est pliée selon trois lignes (23, 24 25) parallèles, pour constituer un corps de boîte sensiblement parallélépipédique. Deux plaquettes (26A, 26B) rectangulaires de polycarbonate ou PVC alvéolaire rigide sont rendues solidaires respectivement des deux extrémités du corps parallélépipédique tubulaire pour constituer les deux parois latérales de la boîte (2). Les plaquettes (26A, 26B) de polycarbonate ou PVC alvéolaire constituant les parois latérales de la boîte (2) peuvent être fixées au niveau des bords des extrémités du corps tubulaire constitué par la plaque (1) pliée, par collage, rivetage ou tout autre moyen approprié. Les deux plaquettes (26A, 26B) rectangulaires de polycarbonate ou PVC alvéolaire peuvent être pourvues chacune d'une ou plusieurs tiges (121, 122) de renfort. Les plaquettes (26A, 26B) de polycarbonate ou PVC alvéolaire constituant les parois latérales de la boîte (2) peuvent être fixées sur les bords des extrémités du corps tubulaire constitué par la plaque (1) de façon que les tiges (121, 122) de renfort des plaquettes (26A, 26B) soient parallèles ou perpendiculaires au fond de la boîte (2). La portion de la plaque (1) située entre une première (27) extrémité de la plaque (1) et la ligne (25) de pliage adjacente peut constituer le couvercle (28) de fermeture de la boîte (2). Le ou les bords (29) supérieurs du corps de la boîte peuvent être pourvus, par exemple, de moyens de fermeture amovibles (non représentés) coopérant avec le ou les bords (27) libres du couvercle (28). Par exemple, le verrouillage amovible du couvercle (28) de fermeture de la boîte (2) peut être réalisé par clipsage ou tout autre moyen approprié. Bien sûr l'invention n'est pas limitée à l'exemple de la figure 3. Ainsi, on conçoit aisément que le procédé selon l'invention permet de réaliser des structures, emballages, boîtiers de formes diverses, autres que parallélépipédiques. Au niveau de la ligne de plage (25) formant l'articulation du couvercle (28), les tiges (21, 22) de renfort peuvent être affaiblies ou coupées pour faciliter l'articulation.

D'autres modifications à la portée de l'homme de métier font également partie de l'esprit de l'invention.

## Revendications

1. Procédé de réalisation de structure rigide caractérisé en ce qu'il consiste :
à insérer à des intervalles donnés dans les tunnels (13) ou alvéoles traversant la plaque (1) de polycarbonate des tiges (21, 22) de matériau rigide ayant une rigidité supérieure à celle du polycarbonate ou du PVC alvéolaire suffisante pour les besoins de la structure à réaliser;
à plier au niveau des tiges (21, 22) la feuille (1) de polycarbonate ou PVC alvéolaire ainsi obtenue selon des directions transversales aux directions d'insertion des tiges de façon à constituer la forme souhaitée pour la structure;
à découper la plaque (1) aux dimensions nécessaires pour la constitution de la structure.

2. Procédé de réalisation de structure rigide selon la revendication 1, caractérisé en que la dimension des tiges est adaptée à la dimension des tunnels (13) traversant la plaque de polycarbonate ou PVC alvéolaire de façon à être retenue par friction pendant la phase de transport jusqu'au poste de pliage.

3. Procédé de réalisation de structure rigide selon la revendication 1 ou 2, caractérisé en que les tiges (21, 22) sont découpées aux dimensions de la plaque de polycarbonate ou PVC alvéolaire.

4. Procédé de réalisation de structure rigide selon la revendication 1 ou 2, caractérisé en que les tiges (21, 22) sont découpées plus courtes que les dimensions de la plaque de polycarbonate ou PVC alvéolaire.

5. Procédé de réalisation de structure rigide selon l'une quelconque des revendications 1 à 4, caractérisé en qu'une bordure (31, 32) en U est solidarisée aux extrémités ouvertes de la plaque de polycarbonate ou PVC alvéolaire.

6. Procédé de réalisation de structure rigide selon la revendication 5, caractérisé en que chaque bordure en U est solidarisée à la plaque de polycarhonate par collage.

7. Utilisation du procédé de réalisation de structure rigide selon l'une quelconque des revendications 1 à 6 pour la fabrication d'un abri constitué d'une plaque de polycarbonate ou PVC alvéolaire, caractérisé en ce que celle-ci comporte à intervalle régulier, insérées dans ses alvéoles des tiges (21, 22) métalliques de rigidification, ces tiges (21, 22) et la plaque (1) étant pliées selon au moins une ligne formant un angle avec la direction des alvéoles (13).

8. Utilisation du procédé de réalisation de structure rigide selon une la revendication 7, caractérisé en ce la plaque (1) de polycarbonate ou PVC alvéolaire comporte au moins deux plages de façon à constituer une fois mise sur le sol un tunnel.

9. Utilisation du procédé selon la revendication 7 ou 8, caractérisé en ce que les extrémités de la plaque (1) débouchant sur les alvéoles (13) sont rendues solidaires d'une bordure en U.

10. Utilisation du procédé de réalisation de structure rigide selon une l'une quelconque des revendications 1 à 6 pour la fabrication de boîtiers ou emballages, caractérisé en ce que la plaque (1) de polycarbonate ou PVC alvéolaire comporte au moins deux plages (23, 24 25) de façon à constituer un corps sensiblement tubulaire dont les faces forment les parois dites longitudinales d'un emballage ou boîte (2), deux plaquettes (26A, 26B) de polycarbonate ou PVC alvéolaire rigide étant rendue solidaires respectivement des deux extrémités du corps tubulaire de façon à constituer les deux parois dites latérales de la boîte (2).

11. Utilisation du procédé de réalisation de structure rigide selon la revendication 10 caractérisé en que la ou les portions de la plaque (1) située entre une ligne (25) de pliage et le bord libre d'une première extrémité (27) de la plaque (1) constitue le couvercle (28) de fermeture de la boîte (2), le couvercle (28) pouvant être rendu solidaire, par des moyens de fixation amovible, d'une seconde extrémité (29) de la plaque (1), situé à l'opposé de la première extrémité, pour assurer le verrouillage amovible du couvercle de la boîte (2)

12. Utilisation du procédé de réalisation de structure rigide selon la revendication 10 ou 11 caractérisé en que les plaquettes (26A, 26B) de polycarbonate ou PVC alvéolaire constituant les parois latérales de la boîte (2) sont fixées respectivement au niveau des bords des extrémités du corps tubulaire (1) formant les parois longitudinales de la boîte (2) par collage, rivetage ou tout autre moyen équivalent.
